Europäisches Patentamt

European Patent Office

Office européen des brevets

(11) Veröffentlichungsnummer: **0 054 733**
**B1**

(12) **EUROPÄISCHE PATENTSCHRIFT**

(45) Veröffentlichungstag der Patentschrift:
18.07.84

(21) Anmeldenummer: 81109402.8

(22) Anmeldetag: 30.10.81

(51) Int. Cl.³: **B 01 F 17/00,** C 02 F 9/00,
C 02 F 5/10, C 07 C 120/00

(54) Grenzflächenaktives Mittel und Verfahren zu seiner Herstellung und dessen Verwendung.

(30) Priorität: **11.12.80 DE 3046742**

(43) Veröffentlichungstag der Anmeldung:
30.06.82 Patentblatt 82/26

(45) Bekanntmachung des Hinweises auf die Patenterteilung:
18.07.84 Patentblatt 84/29

(84) Benannte Vertragsstaaten:
AT DE FR IT NL SE

(56) Entgegenhaltungen:
DE - A - 1 719 432
DE - A - 1 954 450
DE - A - 2 127 622
DE - A - 2 615 036
DE - A - 2 741 213
FR - A - 972 433

(73) Patentinhaber: **SKW Trostberg Aktiengesellschaft,
Dr.-Albert-Frank-Strasse 32 Postfach 1150/1160,
D-8223 Trostberg (DE)**

(72) Erfinder: **Kriele, Ulrich, Katzwalchener Weg 3,
D-8225 Traunreut (DE)**
Erfinder: **Michaud, Horst, Dr., Sonnenleite 11,
D-8223 Trostberg (DE)**
Erfinder: **Oberlechner, Agathe, Hainham Haus Nr. 6,
D-8201 Obing (DE)**

(74) Vertreter: **Weickmann, Heinrich, Dipl.-Ing. et al,
Patentanwälte Dipl.-Ing. H. Weickmann Dipl.-Phys.Dr. K.
Fincke Dipl.-Ing. F.A. Weickmann Dipl.-Chem. B. Huber
Dr.-Ing. H. Liska Möhlstrasse 22,
D-8000 München 86 (DE)**

**Beschreibung**

Die Erfindung betrifft ein neues grenzflächenaktives Mittel und ein Verfahren zu seiner Herstellung aus dem bei der Herstellung von Acrylnitril anfallenden Abwasser sowie dessen Verwendung.

Bei der heute praktisch ausschließlich geübten Herstellung von Acrylnitril durch Ammonoxidation von Propylen (Sohio-Prozeß; vgl. Ullmanns Encyklopädie der technischen Chemie, 4. Auflage, Band 7, Seite 96/97) gelangen bei der Reinigung des Produktgasstroms in nicht unerheblichem Maße Nebenbestandteile in das Waschwasser, deren Isolierung bereits Gegenstand verschiedener Vorschläge ist. Diese erfordern in der Regel Änderungen an der Anlage und an der Verfahrensweise (siehe z. B. DD-A-125 821). Die Isolierung der bisher als technisch interessant angesehenen Verbindungen, beispielsweise der Nitrile der niederen gesättigten und ungesättigten Mono- und Dicarbonsäuren, ist jedoch sehr aufwendig, da diese lediglich in Spurenmengen enthalten sind. Der weitaus größte Teil der in den Waschwässern enthaltenen Feststoffe (ca. 30 bis 50 Gew.-%) besteht aus bisher nicht definierten Produkten, die z. B. durch Reaktion von Acrylnitril oder Acrolein mit Ammoniak, Wasser und Cyanwasserstoff gebildet werden. Bisher führt man im allgemeinen die Waschwässer des Acrylnitrilprozesses der Verbrennung zu, da keine die Aufarbeitung lohnende Verwendbarkeit bekannt ist. Versuche in dieser Richtung sind aus der japanischen Offenlegungsschrift Sho 50/43 124 bekannt. Danach sollen die unbehandelten Abwässer als Zementadditive verwendet werden können.

Aus der DE-A-2 615 036 ist ein Verfahren bekannt zur Entfernung von Stickstoffverbindungen aus dem Abwasser der Acrylnitril-Produktion, bei dem das Abwasser zuerst in einer Destillationskolonne mit Dampf behandelt wird, um die hochsiedenden und harzartigen Verbindungen abzutrennen und danach das Abwasser mit geringen Mengen an Natriumhydroxid und Wasserstoffperoxid oxidiert wird, um ein Abwasser zu erhalten, das einer biologischen Kläranlage zugeführt werden kann.

Eine Aufgabe der Erfindung ist es, diese bisher vernichteten Verbindungen wirtschaftlich zu nutzen.

Eine weitere Aufgabe besteht in der Schaffung neuer grenzflächenaktiver Mittel durch Aufarbeitung dieser Abwässer.

Gelöst werden diese Aufgaben durch die in den Ansprüchen definierte Erfindung.

Gegenstand der Erfindung ist demzufolge ein grenzflächenaktives Mittel, welches dadurch gekennzeichnet ist, daß es aus dem Abwasser, welches bei der Herstellung von Acrylnitril aus Propylen durch Ammonoxidation anfällt, durch Hydrolyse bei alkalischen pH-Werten, bis die Hauptmenge des freiwerdenden Ammoniaks entwichen ist und gegebenenfalls Abtrennung niedermolekularer Bestandteile erhältlich ist und 2,5 bis 4,0 Gew.-% H, 29,0 bis 31,0 Gew.-% C und 5,0 bis 6,0 Gew.-% N enthält.

Ein weiterer Gegenstand der Erfindung ist ein Verfahren zur Gewinnung des grenzflächenaktiven Mittels, welches dadurch gekennzeichnet ist, daß man das bei der Herstellung von Acrylnitril aus Propylen durch Ammonoxidation anfallende Abwasser mit einer seinem Gehalt an organischem, gebundenem Stickstoff wenigstens äquimolaren Menge an starkem Alkali behandelt, bis die Ammoniakentwicklung beendet ist.

Überraschend konnte durch die Hydrolyse die breite Nutzung der Abwasserinhaltsstoffe erreicht werden; die dabei entstehenden Produkte sind neu und als grenzflächenaktive Substanzen gewerblich verwertbar.

Die Hydrolyse erfolgt in alkalischem Milieu. Bevorzugt wird ein Zusatz von NaOH oder $Na_2CO_3$ bzw. der entsprechenden K- oder Li-Verbindungen, der zweckmäßig so gewählt wird, daß auf 1 Mol verseifbaren Stickstoffs im Waschwasser wenigstens 1 Mol NaOH kommt, wobei vorzugsweise ein 5 bis 15%iger Basenüberschuß angewendet wird. Das Verfahren kann jedoch auch mit stöchiometrischem Überschuß an Alkali durchgeführt werden. Jedoch werden dabei weniger günstige Ergebnisse erhalten.

Die Hydrolyse kann auch mit anderen Basen, wie z. B.Calciumoxid, durchgeführt werden. Die Reaktion verläuft damit jedoch langsamer als mit NaOH oder $Na_2CO_3$. Ferner zeigen die entstandenen Calciumsalze der Carbonsäure eine merklich geringere Grenzflächenwirksamkeit als die Alkalisalze.

Das Ende der Ammoniakentwicklung zeigt die Beendigung der Hydrolyse an, was im allgemeinen nach einer Kochzeit von 30 bis 60 Minuten erreicht wird. Ein $H_2O_2$- bzw. $Na_2O_2$-Zusatz wirkt katalytisch und verkürzt die Hydrolysedauer beträchtlich.

Im allgemeinen wird das Abwasser direkt ohne jede vorangehende Behandlung hydrolysiert. Jedoch kann durch Fällung der Feststoffe vor der Hydrolyse mit organischen Lösungsmitteln, wie aliphatischen Alkoholen, wovon Methanol bevorzugt wird, der Alkaliverbrauch eingeschränkt werden. Ferner ist die Verbrennung des verbleibenden Wasseranteils problemlos.

Es wurde beobachtet, daß die grenzflächenaktive, insbesondere die dispergierende und verflüssigende Wirkung des erfindungsgemäßen Mittels vor allem dessen höhermolekularem Anteil zuzuschreiben ist.

Durch Anreicherung dieser Fraktion erhält man somit eine Wirkungsverbesserung. Die Fraktionierung kann beispielsweise durch Dialyse bzw. die Verwendung eines Molekülsiebs erfolgen.

Eine andere Möglichkeit besteht in der fraktionierten Fällung mit niederen aliphatischen Alkoholen, vorzugsweise Methanol. Die Menge und Wirksamkeit der ausgefällten Produkte ist dabei abhängig vom Wasser-Methanol-Verhältnis. Als besonders günstig erwies sich der Bereich von 1 Gew.-Teil Wasser auf 4 bis 9 Gew.-Teile Methanol. Auf diese Weise lassen sich 20 bis 25 Gew.-% des im Waschwasser enthaltenen hydrolisierten Feststoffs isolieren. Eine Erhöhung dieses Anteils hat eine Abschwächung der Dispergierwirkung zur Folge.

Nach Abtrennung des höhermolekularen Anteils mittels Fraktionierung mit Alkohol verbleibt eine wäßrig-alkoholische Lösung, die nur noch eine schwach kaolinverflüssigende Wirkung aufweist. Nach destillativer Abtrennung des Alkohols wird dieser Anteil daher zweckmäßigerweise vernichtet. Der Alkohol kann erneut verwendet werden.

Falls derartige Rückstände aus der Hydrolysereaktion verbrannt werden, könnte der Angriff der Alkalien die Ausmauerung der Verbrennungsanlage beschädigen. In diesen Fällen empfiehlt sich daher die Hydrolyse der Verbindungen ohne Alkalizusatz im Autoklaven, wobei der freigesetzte Ammoniak den erforderlichen alkalischen pH-Wert liefert und autokatalytisch wirkt. Der durch die Wasser- und Ammoniakverdampfung bedingte Druckanstieg liegt bei Temperaturen von 100 bis 115°C zwischen 2 und 20 bar. Auch höhere Temperatur- und Druckwerte sind möglich. Auch hierbei beschleunigt ein geringfügiger Wasserstoffperoxid-Zusatz (ca. 0,1 bis 0,3 Mol pro Mol verseifbaren Stickstoffs) die Reaktion erheblich. Zwei Drittel des Gesamtstickstoffgehalts sind bei dieser Ausführungsform verseifbar. Zur Vermeidung von störendem Ammoniakgeruch kann man nach dem Abtrennen der wenig wirksamen Komponente im angereicherten höhermolekularen Teil das Ammonium durch ein Alkaliion ersetzen. Dies erfolgt in bekannter Weise durch Umsetzung der Lösung mit Alkalihydroxid oder -carbonat. Die Hydrolyse bei erhöhtem Druck ist auch bei Alkalizusatz vorteilhaft.

Die einzelnen Verfahrensvarianten, sei es die unmittelbare Alkalibehandlung des Abwassers oder die Hydrolyse nach vorangegangener Alkoholfällung, führen zum gleichen Produkt. Die grenzflächenaktive Wirkung kann lediglich durch die Anreicherung bestimmter Fraktionen verbessert werden.

Die erfindungsgemäßen Mittel können entweder unmittelbar in Form ihrer Lösung oder getrocknet und gegebenenfalls vermahlen verwendet werden. Im letzteren Fall entsteht ein gut rieselfähiges, nicht hygroskopisches Pulver.

Die erfindungsgemäßen Mittel lassen sich als Dispergiermittel verwenden. Ein geringer Zusatz erhöht die Schwebefähigkeit der dispergierten Teilchen in feststoffarmen Trüben.

Ferner wirken die erfindungsgemäßen Mittel als Verflüssiger von Feststoffsuspensionen, wie Kaolinsuspensionen, Pasten aus Ton, Bentoniten sowie Montmorilloniten. Die Mittel sind zudem hitzestabil, weshalb sich der Einsatz in Bohrschlämmen anbietet.

In Verbindung mit Gips- und Anhydritmassen bewirken die erfindungsgemäßen Mittel eine deutliche zeitliche Verzögerung des Ansteifens und Erhärtens des Gips- bzw. Anhydritbreies. Die Endfestigkeit der Gipsprodukte wird dadurch nicht beeinträchtigt. Dadurch ist die Anwendung in Trockenspachtelmassen und Gipsplatten von Vorteil.

Eine weitere Anwendungsmöglichkeit besteht in der Verzögerung oder Unterdrückung des Kristallwachstums in Kesselanlagen. Aus siedendem hartem Wasser fällt das als Hydrogencarbonat gelöste Calciumcarbonat als stengeliger bis faseriger Aragonit aus. Durch Zusatz der erfindungsgemäßen Mittel wird zunächst das Ausfallen des Calciumcarbonats in der Siedehitze deutlich verzögert. Anstatt der erwarteten Aragonitbildung fallen schließlich kleine Calcitrhomboeder aus. Aufgrund dieses Effekts eignen sich die erfindungsgemäßen Substanzen als Zusatz bei Reinigungs-, Korrosionsschutz- und Steinschutzmittel-Formulierungen.

Die nachstehenden Beispiele sollen die Erfindung weiter erläutern.

Beispiel 1

100 Gew.-Teile Waschwasser der Acrylnitrilherstellung durch Ammonoxidation von Propylen mit 38% Feststoffgehalt, 9,1% (0,65 Mol) organisch gebundenem Stickstoff und 16,8% organisch gebundenem Kohlenstoff werden nach Zusatz von 26 Gew.-Teilen NaOH (0,65 Mol) unter gleichzeitigem Austreiben des in Freiheit gesetzten Ammoniak 35 Minuten zum Sieden erhitzt.

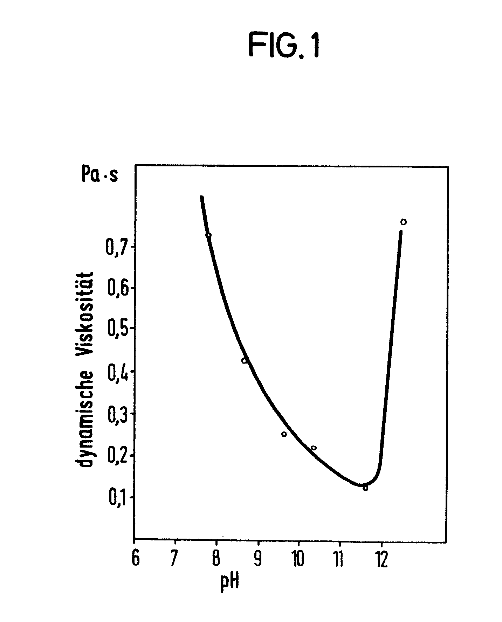

Die erhaltene Lösung besitzt einen Feststoffgehalt von 50%. 0,8 Gew.-Teile der Lösung werden in 200 Gew.-Teilen Leitungswasser (Härtegrad 13,5°H) bei Raumtemperatur gelöst und anschließend werden 200 Gew.-Teile eines handelsüblichen China Clays mit einem Rührgerät (60 Sekunden bei 6000 UpM) eindispergiert. Die Viskosität wird mit einem Rotationsviskosimeter bei verschiedenen pH-Werten, die jeweils durch entsprechende NaOH-Zugabe eingestellt werden, mit waschwasserhydrolysatfreier Suspension verglichen. Fig. 1 der Zeichnung zeigt die Verflüssigungswirkung. Ohne Zusatz des Hydrolysats beträgt die dynamische Viskosität mehr als 20 Pa · s.

Beispiel 2

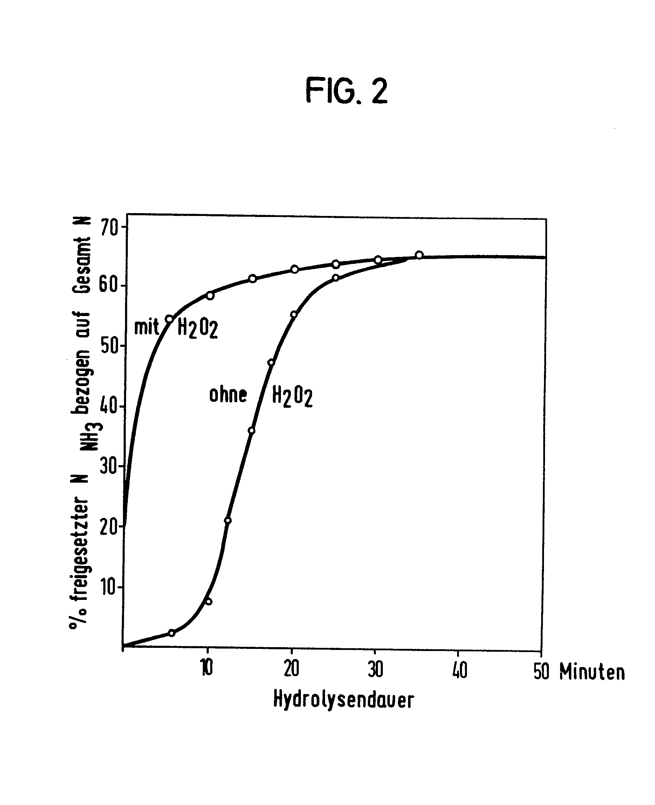

100 Gew.-Teile des in Beispiel 1 beschriebenen Waschwassers werden in Gegenwart von 26 Gew.-Teilen NaOH sowie 5,5 Gew.-Teilen (0,25 Mol pro Mol organisch gebundenen Stickstoffs) $H_2O_2$ zum Sieden erhitzt. Der freiwerdende Ammoniak wird in einer mit 0,1 n $H_2SO_4$ beschickten Vorlage aufgefangen. Die durch sukzessive Ergänzung des Säureverbrauchs einfach zu ermittelnde Hydrolysegeschwindigkeit ist in Fig. 2 der Zeichnung im Vergleich zur $H_2O_2$-freien Hydrolyse dargestellt. Die kaolinverflüssigende Wirkung des nach 20 Minuten Hydrolyse erhaltenen Produkts ist identisch mit der Wirkung des Hydrolyseprodukts gemäß Beispiel 1.

### Beispiel 3

100 Gew.-Teile Waschwasser gemäß Beispiel 1 werden in einem Autoklav ohne Rühren innerhalb 3 Stunden von 20 auf 135°C erhitzt. Der Innendruck steigt auf 4,2 bar an. Im Verlaufe von weiteren 45 Minuten steigt er ohne äußere Wärmezufuhr auf 4,5 bar.

Die erkaltete und entspannte Lösung wird, wie in Beispiel 1 beschrieben, zur Verflüssigung eines Streichclays eingesetzt.

| pH | Viskosität Pa · s bei einer Dosierung von 0,2% Wirksubstanz |
|---|---|
| 7,1 | 1,92 |
| 8,2 | 0,72 |
| 11,2 | 0,31 |
| 11,8 | 0,27 |

### Beispiel 4

Es wird wie bei Beispiel 3 verfahren, jedoch unter Zusatz von 15,8 Gew.-Teilen Perhydrol. Innerhalb 60 Minuten wird von 20 auf 100°C erhitzt, wobei der Innendruck auf 10 bar ansteigt. Bei weiterer Erwärmung auf 130°C im Verlaufe von 180 Minuten steigt der Innendruck auf 12 bar an. Die Messung der Kaolinverflüssigung erfolgt wie in Beispiel 1 beschrieben. Der Zusatz beträgt 0,4% Wirkstoff (=Trockensubstanz), bezogen auf Kaolin.

| pH | Viskosität Pa · s |
|---|---|
| 8,2 | 1,68 |
| 9,6 | 0,40 |
| 10,8 | 0,28 |
| 11,7 | 0,24 |

### Beispiel 5

Die Umsetzung erfolgt analog Beispiel 3, jedoch unter Zusatz von 26 g NaOH. Bei der Erwärmung innerhalb 95 Minuten auf 100°C steigt der Druck auf 9 bar und erreicht nach weiteren 45 Minuten ohne zusätzliche Wärmezufuhr 10 bar.

Zur Messung der Kaolinverflüssigung werden 0,18% Wirkstoff, bezogen auf Kaolin, zugesetzt,

| pH | Viskosität Pa · s |
|---|---|
| 8,0 | 2,40 |
| 10,2 | 0,36 |
| 11,5 | 0,14 |

### Beispiel 6

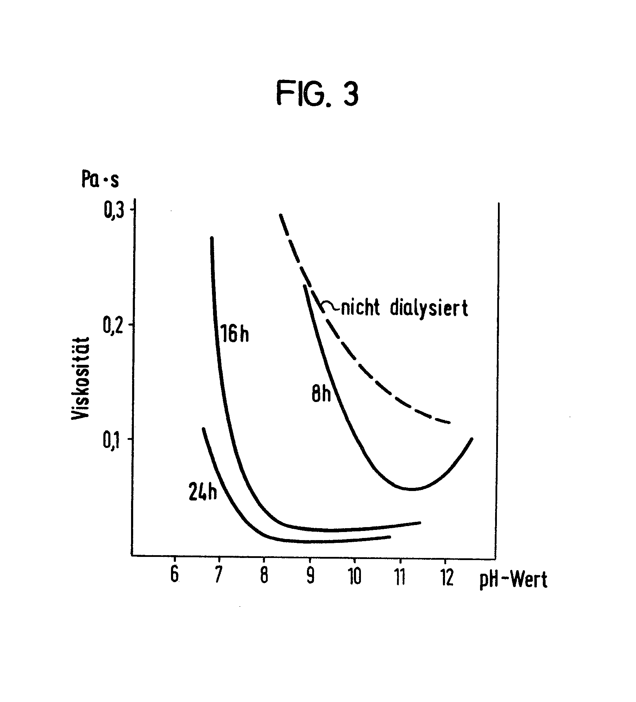

100 Gew.-Teile des Hydrolysats aus Beispiel 5 werden in einer Dialysezelle (Membranfläche — handelsübliche regenerierte Cellulose mit Flächengewicht 31,7 g/m² — 100 cm²) gegen Leitungswasser dialysiert. Die Dialysedauer beträgt im ersten Fall 8 Stunden, im zweiten Fall 16 und im dritten Fall 24 Stunden. Fig. 3 zeigt die Zunahme der Wirksamkeit bei Kaolin. Zugesetzt werden jeweils 0,2% Verflüssiger, bezogen auf Kaolin.

### Beispiel 7

100 Gew.-Teile des Waschwasserhydrolysats aus Beispiel 1 mit 50% Feststoffgehalt werden in 300 Gew.-Teilen Methylalkohol eingerührt, das ausgefallene Produkt abgenutscht, getrocknet und gemahlen. Auf diese Weise werden 23,5% des eingesetzten Feststoffs erhalten. Damit werden folgende Daten ermittelt:

a) Bei der beschriebenen Kaolinverflüssigung und einer Dosierung von 0,4% Produkt beträgt die dynamische Viskosität bei pH 9 und Raumtemperatur 0,018 Pa · s.

b) Bei der Messung der Schwebefähigkeit nach der CIPAC-Methode (Suspensibility of water dispersible powders MT 15) wird für 2 g Kaolin in 250 ml Leitungswasser, 13,5° dH bei 30°C nach 30 Minuten ein Wert von 78% erhalten. Aus dem zusatzfreien Vergleichsversuch resultieren 5% Schwebefähigkeit.

### Beispiel 8

100 Gew.-Teile auf 60% Feststoffgehalt eingeengtes Waschwasser nach Beispiel 1 werden in eine Mischung aus 250 Gew.-Teilen Methylalkohol und 75 Gew.-Teilen Äthylalkohol eingerührt. Nach Abscheidung und Trocknung werden 8% des eingesetzten Feststoffs erhalten. 12 Gew.-Teile dieses Produkts werden sodann mit 8 Gew.-% NaOH und 180 Gew.-Teilen Wasser 60 Minuten unter gleichzeitigem Abtreiben des in Freiheit gesetzten Ammoniaks auf Siedetemperatur gehalten. Die Feststoffausbeute beträgt 20 Gew.-Teile, entsprechend 13% des eingesetzten

Waschwasserfeststoffs.

Nach 0,2% Wirkstoffzusatz, bezogen auf Kaolin, und gleicher Versuchsanordnung erhält man folgende Werte für die dynamische Viskosität:

| pH | Viskosität Pa · s |
|----|-------------------|
| 7  | 0,027             |
| 8  | 0,020             |
| 9  | 0,020             |
| 10 | 0,031             |
| 11 | 0,059             |

### Beispiel 9

500 g Waschwasser werden 100 g CaO zugesetzt, die Mischung wird 3 Stunden am Rückfluß gekocht (Produkt I).

Der gleiche Ansatz wird wiederholt und nach dem Kochen werden 84 g $Na_2CO_3$ zugegeben. Die Lösung wird nach 2stündigem Rühren von dem ausgefallenen $CaCO_3$ getrennt (Produkt II).

Waschwasserhydrolysat gemäß Beispiel 1 = Produkt III. Messung der Verflüssigung ebenfalls gemäß Beispiel 1.

| pH | ohne Zusatz | I | II | III |
|----|-------------|-------|-------|-------|
| 6  |             | 11 800 | 4 400 | 2 500 |
| 8  |             | 3 800 | 580 | 580 |
| 9  | 10 000      | 3 200 | 340 | 380 |
| 11 |             | 540 | 230 | 140 |
| 12 |             | 610 | 500 | 150 |

Viskositätswerte in mPa · s.

### Beispiel 10

Nach Sprühtrocknen gibt das nach Beispiel 1 erhaltene Hydrolysat ein rieselfähiges Produkt, das sich als Zusatz für pulverförmige Formulierungen, z. B. Spachtelmassen auf Gipsbasis, eignet.

Nachfolgende Tabelle zeigt die Wirkung des Waschwasserhydrolysats als Gipsverzögerer.

| Menge, bez. auf Gips, Gew.-% | Wassergipswert | Versteifungsbeginn | Versteifungsende |
|---|---|---|---|
| 0 | 0,54 | 10 | 25 |
| 0,01 | 0,53 | 18 | 47 |
| 0,02 | 0,53 | 32 | 60 |
| 0,05 | 0,53 | 110 | 127 |

### Beispiel 11

1 ppm des sprühgetrockneten Produkts von Beispiel 10 wird Leitungswasser der Härte 15 (15° dH) zugesetzt und zum Sieden gebracht. Während sich bei Wasser ohne Zusatz an der Gefäßwandung stengeliger bis faseriger Aragonit abscheidet, zeigt Wasser mit dem oben genannten Zusatz nur eine geringfügige Bildung kleiner Calcitrhomboeder.

### Beispiel 12

3000 Gew.-Teile Waschwasser mit einem Gehalt von 9,17% organisch gebundenem Stickstoff und frei von Ammoniak wurden zusammen mit 550 Gew.-Teilen gebranntem Kalk (CaO) in einem Autoklav erhitzt. Nach Erreichen von 110° C und 1$^1$/$_2$ Stunden Kochzeit wurde entspannt und der durch Nitril- bzw. Amidverseifung freigesetzte Ammoniak abgelassen. Anschließend wurde unter Druck bis auf 170° C erhitzt und bei dieser Temperatur 3 Stunden die Hydrolyse vollendet.

Das anschließend sprühgetrocknete Produkt stellt ein hellfarbenes, kaum hygroskopisches Produkt dar.

Zur Ermittlung der Verzögerungswirkung der Gipsversteifung wurde Stuckgips eingesetzt und das oben erhaltene sprühgetrocknete Produkt zugesetzt.

| Zusatz Gew.-% | Wasser-/Gipswert | Versteifungsbeginn | Versteifungsende |
|---|---|---|---|
| 0 | 0,51 | 3 Min. | 12 Min. |
| 0,01 | 0,52 | 12 Min. | 33 Min. |
| 0,02 | 0,52 | 19 Min. | 42 Min. |
| 0,03 | 0,52 | 31 Min. | 53 Min. |

**Patentansprüche**

1. Grenzflächenaktives Mittel, dadurch gekennzeichnet, daß es aus dem Abwasser, welches bei der Herstellung von Acrylnitril aus Propylen durch Ammonoxidation anfällt, durch Hydrolyse bei alkalischen pH-Werten bis die Hauptmenge des freiwerdenden Ammonniaks entwichen ist und gegebenenfalls Abtrennung niedermolekularer Bestandteile erhältlich ist und 2,5 bis 4,0 Gew.-% H, 29,0 bis 31,0 Gew.-% C und 5,0 bis 6,0 Gew.-% N enthält.

2. Verfahren zur Gewinnung des grenzflächenaktiven Mittels nach Anspruch 1, dadurch gekennzeichnet, daß man das bei der Herstellung von Acrylnitril aus Propylen durch Ammonoxidation anfallende Abwasser mit einer seinem Gehalt an organischen gebundenem Stickstoff wenigstens äquimolaren Menge an starkem Alkali behandelt, bis die Hauptmenge des freiwerdenden Ammoniaks entwichen ist.

3. Verfahren nach Anspruch 2, dadurch gekennzeichnet, daß man die Hydrolyse bei einem pH-Wert von wenigstens 8 durchführt.

4. Verfahren nach Anspruch 3, dadurch gekennzeichnet, daß man die Hydrolyse bei Überdruck durchführt.

5. Verfahren nach einem der Ansprüche 2 bis 4, dadurch gekennzeichnet, daß man dem Abwasser $H_2O_2$ in freier oder gebundener Form zusetzt.

6. Verwendung des grenzflächenaktiven Mittels gemäß Anspruch 1 als Zusatz zu Dispersionen und Pasten von Mineralien oder zu hartem Wasser.

**Claims**

1. A surface-active agent, characterised in that it is obtainable from the waste water which is obtained in the production of acrylonitrile from propylene by ammonoxidation, by hydrolysis at alkaline pH values until the main amount of the liberated ammonia has escaped and optional separating off of low molecular weight components and contains 2.5 to 4.0 wt.% H, 29.0 to 31.0 wt.% C and 5.0 to 6.0 wt.% N.

2. Process for the obtaining of the surface-active agent according to claim 1, characterised in that one treats the waste water obtained in the production of acrylonitrile from propylene by ammonoxidation with an amount of strong alkali which is at least equimolar to its content of organic bound nitrogen until the main amount of the liberated ammonia has escaped.

3. Process according to claim 2, characterised in that one carries out the hydrolysis at a pH value of at least 8.

4. Process according to claim 2 or 3, characterised in that one carries out the hydrolysis under increased pressure.

5. Process according to one of claims 2 to 4, characterised in that one adds $H_2O_2$, in free or bound form, to the waste water.

6. Use of the surface-active agent according to claim 1 as additive to dispersions and pastes of minerals or to hard water.

**Revendications**

1. Agent tensio-actif, caractérisé en ce qu'il peut être obtenu à partir de l'eau résiduaire qui se forme lors de la fabrication de l'acrylonitrile à partir du propylène par ammonoxydation, par hydrolyse à des pH alcalins jusqu'à ce que la plus grande partie de l'ammoniac libéré soit dégagée, et le cas échéant séparation des constituants de faible masse moléculaire, et en ce qu'il contient 2,5 à 4,0% en poids de H, 29,0 à 31,0% en poids de C et 5,0 à 6,0% en poids de N.

2. Procédé de préparation de l'agent tensioactif selon la revendication 1, caractérisé en ce que l'eau résiduaire qui se forme lors de la fabrication de l'acrylonitrile à partir du propylène par ammonoxydation est traitée par une quantité équimolaire à sa teneur en azote organiquement liée d'alcali fort, jusqu'à ce que la plus grande partie de l'ammoniac libéré soit dégagée.

3. Procédé suivant la revendication 2, caractérisé en ce qu'on effectue l'hydrolyse à un pH d'au moins 8.

4. Procédé suivant la revendication 3, caractérisé en ce qu'on effectue l'hydrolyse sous une surpression.

5. Procédé suivant l'une quelconque des revendications 2 à 4, caractérisé en ce qu'on ajoute à l'eau résiduaire de l'$H_2O_2$ sous forme libre ou liée.

6. Utilisation de l'agent tensio-actif suivant la revendication 1 comme additif pour des dispersions et des pâtes de minéraux ou à l'eau dure.

# FIG. 1

# FIG. 2

# FIG. 3